# EUROPEAN PATENT SPECIFICATION

(11) **EP 2 043 372 B1**
(45) Date of publication and mention of the grant of the patent: **17.07.2019**
(21) Application number: 07117295.1
(22) Date of filing: 26.09.2007
(51) Int. Cl.: H04N 21/43, H04N 21/2343

(54) **Method for audio and video synchronization, receiving and transmitting device**
Verfahren zur Audio- und Videosynchronisation, Empfangs- und Sendegerät
Procédé de synchronisation audio et vidéo, dispositif de réception et de transmission

(43) Date of publication of application: 01.04.2009
(73) Proprietor: Vodafone GmbH, 40549 Düsseldorf (DE)
(72) Inventor: De Weerd, Jeroen, 6229 WE Maastricht (NL); Verheijen, Wouter, 1102 JE Amsterdam (NL)
(74) Representative: Müller & Schubert

(56) References cited:
- EP-A- 0 987 904
- EP-A- 1 146 730
- WO-A-02/51155
- US-A- 5 477 542
- US-A1- 2003 128 294
- US-A1- 2006 053 455
- US-B1- 6 351 233
- US-B1- 6 480 902
- VENKAT RANGAN P ET AL: "Continuity and Synchronization in MPEG" IEEE JOURNAL ON SELECTED AREAS IN COMMUNICATIONS, IEEE SERVICE CENTER, PISCATAWAY, US, vol. 14, no. 1, January 1996 (1996-01), XP011054434 ISSN: 0733-8716

## Description

The present invention relates to a method for synchronization of audio and video signals as well as to a receiving and to a transmitting device of a video system.

In video systems, such as video call or video conference systems image and voice signals are desired to be output at a receiving terminal synchronously, i.e. a voice signal which was input at a transmitting terminal at the same time as a video signal at the transmitting terminal should be output at the receiving terminal simultaneously.

In order to provide such a synchronized output of signals at the output terminal US 6,351,233 B1 suggests a video conference system. The video conference system is supposed to allow a realistic video conference without the need for increasing the header information and regardless of compression/expansion system. According to the suggested system a transmitting terminal simultaneously and periodically embeds a marking signal to each of the image and voice signals corresponding to each other. After compressing and multiplexing each of the marked image and voice signals, they are transmitted to the other party. The receiving terminal expands the received image and voice signals and detects an arrival time difference based on marking signals detected from the received image and voice signals. Depending on the arrival time difference, the output of the image or voice is delayed.

In particular in IP based transmission of video and audio, the transmission time of video will generally be longer. Therefore the usage of a system according to the prior art reference will result in considerable gaps in the audio output. Such gaps are undesirable for example during a video conference.

In known video conferencing systems conference frameworks such as H.323 and streaming media framework, e.g. RTSP (realtime streaming protocol), RTMP (routing table maintenance protocol) are used. These systems make use of different multimedia container formats, video formats and audio formats. As the voice and the video stream have to be recombined at the receiving end, a buffer having considerable capability is required. In addition the video and the voice transmission use different codecs (compression and decompression systems). The video and voice stream are recombined after having been decoded. The delay of the stream depends on the network used for the transmission and on the lost packets. Since video is the most demanding part of the multimedia stream, the video part has an effect on the audio delay. If this audio channel is used for voice in a video conference call, user might experience an unacceptable delay in both voice and the video, e.g. more than 200ms.

US 2006/0053455 A1 relates to the synchronization of signals. In the described method signals (e.g. audio and video) are time-synchronized at a source. Subsequently, the signals are transmitted to a receiving apparatus. At the receiving apparatus signals which arrive out of synch may be time-synchronized either manually or through time stamping. The synchronization is performed by reducing the time rate of displaying the advanced signal, i.e. the leading signal. A delay line is provided for delay of the display or reduction of time rate of displaying the advanced signal. The delay line may comprise buffers for storing the received signals. Furthermore a delay compensation circuit is provided. With this compensation circuit the time rate of displaying the advanced signal may be reduced continuously. For example, the user may adjust the time rate via a knob or some other control means. Alternatively, the time rate of the display of the advanced signal may be reduced discontinuously. This may be realized by introducing time delay gaps in the advanced signal. During this time delay gap, the advanced signal is held in suspension and is not being further transmitted. One disadvantage of this method is that the time delay gap will have to chosen to be long enough for the signals to be in sync, which will result in jumps of the leading signal.

In US 5,477,542 a method and apparatus for controlling multimedia information communication is described. In this method a communication mode is automatically changed over in accordance with a load condition of a packet switching network. A receiving terminal monitors whether a voice packet transmission delay exceeds a predetermined value. If such delay of voice packet transmission is detected, the receiving device issues a request to the transmitting terminal to stop video data transmission. Once a lower threshold value of the delay has been reached a request to resume the video data transmission is issued by the receiving terminal. One disadvantage of this method is that is does not address a synchronization of two different signals but merely offers a real-time transmission of at least the voice data packets over a network.

US 6,480,902 B1 discloses an intermedia synchronization system for communicating multimedia data in a computer network. For this purpose, the system includes a synchronization marker at a transmitting site and a synchronization forcer at a receiving site, which are connected via computer networks. The synchronization marker performs a sequential mark marking of frames per interval. The synchronization forcer regulates the play time of the audio signals and their corresponding video signals according to their sequential marks. The synchronization forcer also applies near-nonblocking playout for audio frames and blocking playouts for video frames. For this purpose, if an entire set of video frames arrives later than their corresponding audio frame, the audio frame is released as soon as a either maximum tolerable delay times out or the first video frame in the set has arrived. One disadvantage of this system is that the control for the output of the audio frames is high.

The problem underlying the present invention is thus to provide a solution for video systems allowing an improved user experience and an easy control of the audio output.

According to a first aspect, the problem is solved by a method for synchronization of corresponding audio signals and video signals in a video system for transmission of audio signals and video signals from a transmitting device to a receiving device with the features of claim 1.

The transmitting device and the receiving device can be any computing device capable of accessing a network for signal transmission and equipped for input and output of video and audio signals. The receiving and the transmitting device can be Personal Computers PCs, handheld devices or mobile phones. Signals according to the present invention are video streams and audio streams. Each of the signals consists of packages of data. For the audio or voice stream these packages will be referred to as data packets and for the video stream the packages will also be referred to as video frames. Corresponding signals or corresponding data packets and video frames are packages which have been input at the transmitting device at the same time and/or have been sent from the transmitting device at the same time.

In order to identify corresponding signals or packages, the data packets and the video frames may be provided with a time stamp at the transmitting device. Processing of signals according to the present invention may comprise compression and decompression, comparison of packages of the respective signal as well as storing and/or deleting of packages. By processing or handling the audio signal and the video signals separately, the difference in time of arrival of packages at the receiving device can be decreased and/or compensated. In particular, it is possible to output a data package without having to output the corresponding video frame, thus avoiding an impact of delay in video transmission on audio transmission and output. With decoupling the audio stream from the video stream according to the present invention, these delays can be addressed and compensated. In particular, the video stream can be adjusted to the voice stream. This means that the transmission and output of the signals will be ruled by the speed of transmission of the voice stream.

A video signal, in particular the respective video frames, are preferably considered to be available at the receiving device, if they are ready to be output, i.e. displayed. This means that the video frames sent from the transmitting device have been received at the receiving device and have been decompressed and where applicable have been decoded. In this state the video frame can be displayed to the user of the receiving device.

By outputting the data packets of the audio or voice signal when corresponding video signals are not available, an interruption of the audio output can be avoided. It will, hence, be possible to generate a higher Quality of Service (QoS) for the voice channel and to provide the user with an improved user experience.

According to the present invention, the audio signal, i.e. the data packet, are stored or buffered in absence of a corresponding video signal. In this case, a storage unit or buffer has assigned a threshold value for buffering data packets to it. The threshold value is a maximum buffering time, e.g. 100ms or 200ms. By storing the received audio signals or data packets at least for a given time, minor delays in transmission of video signals or video frames can be compensated. The assigning of a threshold value to the buffer assures that no noticeable gap in the audio output occurs. Once the threshold value is exceeded, the audio data packet will be output. If the corresponding video frame is available at that point of time, the audio and video signal will be output together. Otherwise the audio signal will be output without video signal.

The receiving device according to one embodiment of the invention, may discard video signals in absence of corresponding audio signals at the receiving device. By providing the option of intentionally discarding video signals, the video and audio output can be synchronized. In particular, where audio signals have been output due to lack of corresponding video signals, the discarding of video signals ensures that no video will be displayed to the user for which the audio has already been output. This means, video frames arriving at the receiving device after the corresponding audio signal has been output will be discarded.

According to the invention, the receiving device will detect the delay in receiving video signals and will generate information on the delay to be transmitted to the transmitting device. The delay of the video signal is preferably the time difference between the time at which the video signal is received at the receiving device and the time at which the corresponding audio signal has been received at the receiving device. The delay may, however also be the time difference between the time when the audio signal is ready for output, i.e. has been for example decompressed, and the time when the video signal is ready for output. The information on this delay is the indication that the delay is greater than a given time period. This given time period is the maximum buffer time of the storage unit, where audio signals can be stored in absence of corresponding video signals.

This feedback to the transmitting device allows for an adjustment of the video transmission to the audio transmission. Such adjustment may be changing of video signal properties and/or video signal transmission parameters. This embodiment is advantageous as a feedback loop based on the voice signal transmission time can be established. The signal properties that can be changed may be the resolution of the video frames. The transmission parameters which may be altered can be number of frames sent per second, the codec used for compressing and decompressing of the frames and/or the channel used for transmission. Another transmission parameter, which might be changed, is a re-transmission scheme. In a re-transmission scheme it is generally defined that in case of loss of a video frame or receipt of a video frame of minor quality, a re-transmission will be requested from the transmitting device. By avoiding such a re-transmission, the amount of transmitted video frames can be lowered and thus the speed of the video transmission can be adapted to the speed of the voice transmission.

The delay in receipt of corresponding audio and video signals is determined by monitoring a threshold value of a storage unit for the audio signals. The threshold value of the storage unit or buffer is the maximum storage time. By using this threshold value as a basis to determine the delay, the information on the delay is the information that the delay is larger than the maximum storage time. Hence, no additional calculation of the actual delay time is necessary.

According to one embodiment of the inventive method, the audio signals and the video signals are being transmitted via separate communication channels. These communication channels can be different channels on the same network or preferably different channels on different networks. With this approach different physical layers can be used for the transmission, e.g. 3G and WLAN and the transmission can be spread across available network resources. In addition, different communication channels may have different transmission durations for signals. By using different channels for the signals, the channel can be chosen for each signal to optimize the transmission time thereof.

Preferably, the video signals and/or the audio signals are being transmitted via a communication channel giving priority to the respective signals. In particular, the voice stream can be sent using VoIP (voice over IP), where the transmission units such as routers are set to give VoIP packets higher priority then the video frames.

According to another aspect of the invention, the problem is solved by a receiving device of a video system for transmission of video signals and audio signals from a transmitting device to a receiving device via a communication network with the features according to claim 4.

By providing a comparison unit at the receiving device, audio and video signals can be compared, in particular with respect to their time of sending or the time of input. By this comparison corresponding data packet and video frame can be determined.

The interconnection between the comparison unit, the audio storage unit and the audio output unit, e.g. a loud speaker, is preferably a connection from the comparison unit to the audio storage unit and/or to the audio output unit. It is, however, also possible that the audio storage unit is connected to the comparison unit and the comparison unit is connected to the output unit. In the latter case, the connection between the audio storage unit and the comparison unit is bidirectional.

In the first case, all incoming audio signals will be processed at the comparison unit, i.e. will be compared with video signals to determine whether a corresponding video frame is available for the received audio data packet. If there is no corresponding video frame available, the data packet can be stored in the storage unit. Alternatively, the data packet can be transmitted to the output unit and can be output. Also data packets from the storage unit may be compared in the comparison unit. In particular, where a threshold value of the storage unit has been reached, the data packet exceeding the threshold value, in particular a predetermined storage time, can be compared to video signals available at the receiving device and can be transmitted to the output unit in absence of a corresponding video signal.

The receiving device comprises an information generating unit for generating information on delay of receipt of corresponding audio and video signals. The generating unit may generate feedback information for the transmitting device.

The receiving device is preferably equipped to be used in a method according to the present invention.

A transmitting device of a video system for transmission of video signals and audio signals from a transmitting device to a receiving device via a communication network may be used, wherein the transmitting device comprises a transmission unit for transmitting audio signals and a transmitting unit for transmitting video signals. The transmitting device is characterized in that it comprises a feedback unit for receiving feedback from the receiving device, which is connected to the transmission unit for transmitting video signals.

By providing a connection between the feedback unit and a transmission unit for the transmission of video signals, the properties of the video signals and/or transmission properties can be adjusted based on the feedback received from the receiving device.

The transmitting device is preferably equipped to be used in a method according to the present invention.

It is to be noted that the receiving device may also serve as a transmitting device and vice versa. For clarity sake the notation of transmitting and receiving device, which describes the current usage of the device will, however, be adhered to in the description.

Units of the different devices may be realized as hardware or software components. The units may be separate units or may at least partially be combined.

Features and advantages which are described with regards to the inventive method also apply to the inventive receiving device and vice versa.

The invention will now be described again with reference to the enclosed figures, wherein:
Figure 1 shows a schematic depiction of a video system; and
Figure 2 shows a flow chart of one embodiment of the inventive method.

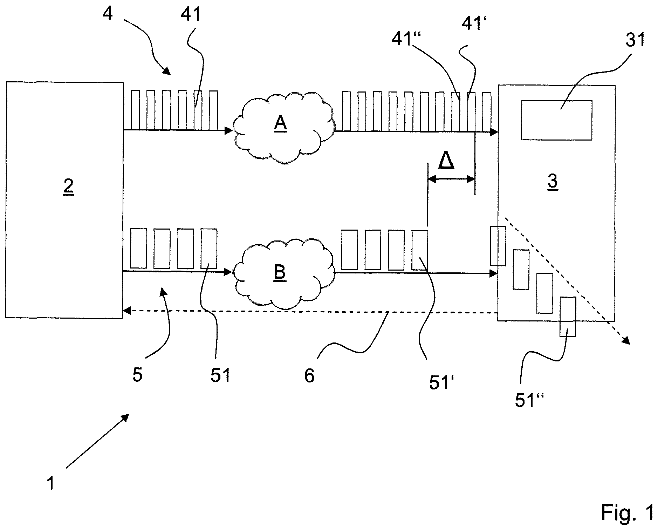

In Figure 1 a video system 1 with a transmitting device 2 and a receiving device 3 is shown.

At the transmitting device 2 video and audio or voice signals are input. This can be done by using a camera and microphone (not shown), respectively. The video signal and voice signal or stream are decoupled from each other and will be transmitted via transmission channels 4 and 5. In Figure 1 the voice or audio signal is transmitted via channel 4 using network A and the video signal is transmitted via channel 5 using network B. The data packets 41 of the voice signal are smaller than the video frames 51 of the video signal. Both, the voice and the video stream, i.e. the respective data packages, will be provided with a time stamp before transmission. The voice data packets 41 will arrive at the receiving device 3 faster than the video data packages or video frames 51. Hence, a delay in time depicted by the Delta (Δ) will occur between a voice data packet 41' and the corresponding video frame 51'. The delay Δ can be used to provide feedback 6 to the transmitting device 2.

The voice data packet 41' and data packets 41" received after the data package 41' will be buffered in a buffer 31 of the receiving device 3. The buffer 31 has a threshold value for the time of buffering.

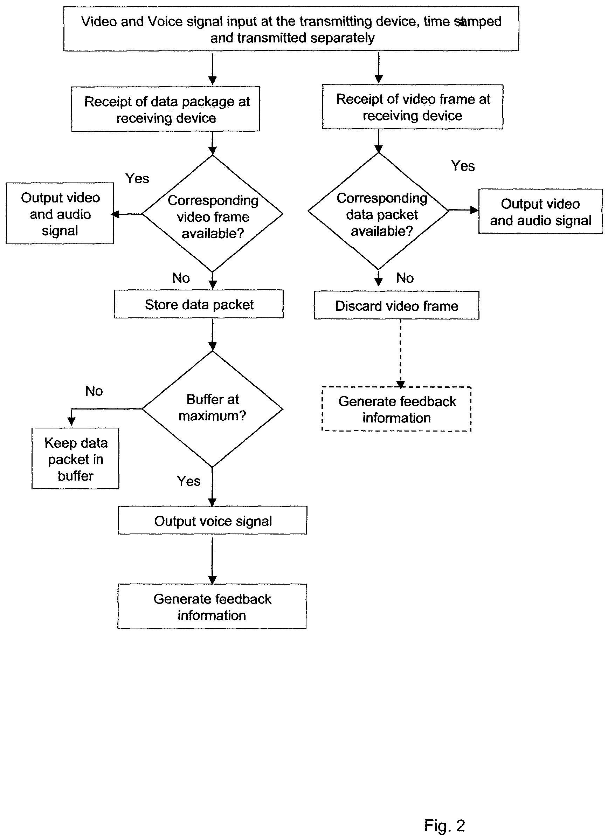

One embodiment of the present invention will now be described with reference to Figure 2. Audio and video signals input at the transmitting device 2 will be marked with a time stamp. This time stamp may reflect the time of input or the time of sending of the respective data packets 41 and corresponding video frames 51. When either a data packet 41 or a video frame 51 is received at the receiving device 3, a comparison is carried out to determine whether the corresponding video frame 51 or data packet 41 with the same time stamp has already been received at the receiving device 3 and is available for output. If the corresponding package, data packet 41 or video frame 51 is available at the receiving device 3 for output, the voice and video stream are output together. The receiving device 3 will be equipped with respective output means, such as loud speaker and display (not shown).

The voice data packets 41, due to their smaller size and perhaps also due to the transmission channel 4 used for the voice stream, will in most cases arrive at the receiving device 3 before the respective video frame 51. If a data packet 41 arrives at the receiving device 3 and the corresponding video frame 51 has not been received, the data packet 41 will be stored or buffered.

In the embodiment shown in Figure 2 a threshold value for storage time is assigned to the buffer. Once a data packet 41, which has been stored in the buffer reaches the threshold, e.g. has been stored for 100ms, the voice signal will be output without the corresponding video signal. It is also possible that before outputting the voice signal by itself another comparison with video frames 51 is carried out to identify whether the video frame 51 which corresponds to the audio data packet 41 which is about to be output, is available at the receiving device 3.

If the maximum storage time has not been reached the data packet 41 will be kept in the buffer.

When video frames 51 are received at the receiving device 3, the receiving device 3 will also determine whether the corresponding voice data packet 41 is available at the receiving device 3. If the corresponding data packet 41 is not available, it is obvious that the respective voice signal has already been output. In this case, the video frame 51 is dropped, discarded and not displayed. This means that the voice output will not wait for this video frame 51 to arrive.

At the time when the first voice data packet 41 is output without the corresponding video frame 51, i.e. when the threshold value of the buffer 31 is reached, according to the embodiment shown in Figure 2, feedback information is generated at the receiving device 3. This feedback information will be send to the transmitting device 2.

The feedback information will notify the transmitting device 2 of the delay of the video frames 51 compared to the data packets 41. The feedback may comprise commands to change for example the transmission rate, decrease the frame rate for the video frames 51 or to use a different compression codec at the transmitting device 2. Thereby, a feedback loop based on the speed of transmission of the voice data packets 41 will be established. This means, that the transmission of the video signal can successively be adjusted to the transmission of the audio signal.

Alternatively, the feedback generated at the receiving device 3 may result in a corresponding message being displayed to the user of the transmitting device 2, who can then take appropriate measures, to speed up the video transmission.

If the feedback information is generated once the maximum buffer time has been exceeded, the feedback information contains an indication of the delay time between voice data packets 41 and video frames 51 as being at least the maximum buffer time. This is advantageous as the exact delay time does not have to be calculated.

As indicated in Figure 2 by the dashed line, the feedback information may also be generated once the first video frame 51 has been discarded due to lack of a corresponding voice data packet 41. In this case the time of arrival of the video frame 51 and the time of arrival or time of output of the corresponding data packet 41 can be used to determine the delay of the video frame 51.

The invention is not limited to the examples described with reference to the enclosed figures. For example, it is also be possible that the threshold set for the buffer is the amount of data packages to be stored therein. In this case, the receipt of a data package which would lead to exceeding the maximum amount will trigger the first data package of the buffer to be output without the corresponding video frame.

The inventive solution enables the voice stream to be sent over a different channel that has higher priority setting for the voice data packages, then the video stream. For example, voice over IP (VoIP) can be used. Some routers give priority to VoIP packets over the Internet traffic. The video data packages can be sent via a different channel, yet would not slow down the voice stream thus improving the user experience.

With the present invention a different and new way of quality measurement in which the time difference between the voice stream and the video stream, in particular between the receipt of the respective data packages and sent at the same time, is used for the feedback. When the user of the receiving device notices that the difference in arrival time between voice and video packets is repeatedly exceeding a certain threshold, the user could request the sender to take appropriate measures, e.g. select a lower screen resolution or transmission of fewer frames per second (fps) manually.

The present invention also allows for use of different physical layers for the audio and the video stream, respectively. The audio stream could for example be sent over a 3G network, while the video stream may be sent over WLAN. In this case, the transmitting and the receiving device will be equipped to combine both network technologies. The usage of different networks results in spreading the usage of network resources.

## Claims

1. Method for synchronization of corresponding audio signals and video signals in a video system for transmission of audio signals (41) and video signals (51) from a transmitting device (2) to a receiving device (3), wherein
- the audio signals (41) and video signals (51) are being processed separately at the receiving device (3),
- the receiving device (3) upon receipt of an audio signal (41) detects whether a corresponding video signal (51) is available at the receiving device (3) and upon receipt of a video signal (51) detects whether a corresponding audio signal (41) is available at the receiving device (3) and the video signal (51) and audio signal (41) are output together if the corresponding signals are available,
- the receiving device (3) in absence of a corresponding video signal (51) stores the received audio signal (41) in a storage unit, wherein the audio signal (41) is stored until a threshold value for storage time of the storage unit is reached, if the corresponding video signal (51) is not available at the receiving device, and once the threshold for storage time is exceeded the audio signal will be output with the video signal, if at that point of time the corresponding video signal is available or otherwise without video signal, **characterized in that**
- the receiving device (3) detects the delay in receiving video signals compared to corresponding audio signals (51) and generates information on the delay to be transmitted to the transmitting device (2), the information on the delay being the information that the delay is larger than the threshold value for storage time of the storage unit (31) for storing audio signals (41) and
- upon receipt of information on the delay of video signals at the transmitting device, video signal properties and/or video signal transmission parameters are changed at the transmitting device to adjust the transmission of the video signal to the transmission of the audio signal.

2. Method according to claim 1, **characterized in that** the receiving device (3) discards video signals (51) in absence of the corresponding audio signal (41) at the receiving device (3).

3. Method according to anyone of claims 1 or 2, **characterized in that** the audio signals (41) and the video signals (51) are being transmitted via separate communication channels (4, 5).

4. Receiving device of a video system (1) for transmission of video signals (51) and audio signals (41) from a transmitting device (2) to a receiving device (3) via a communication network (A, B), wherein the receiving device (3) comprises an audio receiving unit for receiving audio signals (41), an audio storage unit (31) for storing audio signals (41), a video receiving unit for receiving video signals (51) and at least one comparison unit for comparing audio signals (41) and video signals (51) for detecting upon receipt of an audio signal (41) whether a corresponding video signal (51) is available at the receiving device (2) and upon receipt of a video signal (51) whether a corresponding audio signal (41) is available at the receiving device (3), the video signal (51) and audio signal (41) being output together if the corresponding signals are available, wherein the comparison unit, the audio storage unit (31) and an output unit for output of audio signals are interconnected, wherein the audio storage unit (31) has a threshold value for storage time and the received audio signal is stored in the audio storage unit in absence of a corresponding video signal, wherein the audio signal is stored until the threshold value for storage time is reached, if the corresponding video signal is not available at the receiving device, and once the threshold value for storage time is exceeded the audio signal will be output with the video signal, if at that point of time the corresponding video signal is available or otherwise without video signal, **characterized in that** the receiving device further comprises an information generating unit for generating information on delay of receipt of corresponding audio and video signals, wherein the receiving device (3) detects the delay in receiving video signals (51) compared to corresponding audio signals (41) and generates information on the delay to be transmitted to the transmitting device (2) allowing the video signal properties and/or video signal transmission parameters to be changed at the transmitting device, wherein the information on the delay is the information that the delay is larger than the threshold value for storage time of the audio storage unit (31).

5. Receiving device according to claim 4, **characterized in that** it is equipped to be used in a method according to anyone of claims 1 to 3.

## Patentansprüche

1. Verfahren zum Synchronisieren korrespondierender Audiosignale und Videosignale in einem Videosystem zum Übertragen von Audiosignalen (41) und Videosignalen (51) von einer Übertragungseinrichtung (2) zu einer Empfangseinrichtung (3), wobei die Audiosignale (41) und Videosignale (51) an der Empfangseinrichtung (3) separat verarbeitet werden, wobei die Empfangseinrichtung (3) beim Empfang eines Audiosignals detektiert, ob ein korrespondierendes Videosignal (51) an der Empfangseinrichtung (3) verfügbar ist und bei Empfang eines Videosignals (51) detektiert, ob ein korrespondierendes Audiosignal (41) an der Empfangseinrichtung (3) verfügbar ist und das Videosignal (51) und das Audiosignal (41) zusammen ausgegeben werden, wenn die korrespondierenden Signale verfügbar sind, wobei die Empfangseinrichtung (3) in Abwesenheit eines korrespondierenden Videosignals (51) das empfangene Audiosignal (41) in einer Speichereinheit speichert, wobei das Audiosignal (41) gespeichert wird, bis ein Schwellenwert für die Speicherzeit der Speichereinheit erreicht wird, wenn das korrespondierende Videosignal (51) an der Empfangseinrichtung nicht verfügbar ist, und wenn der Schwellenwert für die Speicherzeit überschritten wird, das Audiosignal mit dem Videosignal ausgegeben wird, wenn an diesem Zeitpunkt das korrespondierende Videosignal verfügbar ist oder andernfalls ohne Videosignal, **dadurch gekennzeichnet, dass** die Empfangseinrichtung (3) die Verzögerung beim Empfangen von Videosignalen verglichen zu korrespondierenden Audiosignalen (41) erfasst und eine an die Übertragungseinrichtung (2) zu übertragende Information über die Verzögerung erzeugt, wobei die Information über die Verzögerung die Information ist, dass die Verzögerung größer ist als der Schwellenwert für die Speicherzeit der Speichereinheit (31) zum Speichern von Audiosignalen (41) und dass bei Empfang von Informationen über die Verzögerung von Videosignalen an der Übertragungseinrichtung, Videosignaleigenschaften und/oder Videosignalübertragungsparameter an der Übertragungseinrichtung verändert werden, um die Übertragung des Videosignals an die Übertragung des Audiosignals anzupassen.

2. Verfahren nach Anspruch 1, **dadurch gekennzeichnet, dass** die Empfangseinrichtung (3) Videosignale (51) in Abwesenheit des korrespondierenden Audiosignals (41) an der Empfangseinrichtung (3) verwirft.

3. Verfahren nach einem der Ansprüche 1 oder 2, **dadurch gekennzeichnet, dass** die Audiosignale (41) und die Videosignale (51) über separate Kommunikationskanäle (4, 5) übertragen werden.

4. Empfangseinrichtung eines Videosystems (1) zum Übertragen von Videosignalen (51) und Audiosignalen (41) von einer Übertragungseinrichtung (2) zu einer Empfangseinrichtung (3) über ein Kommunikationsnetz (A, B), wobei die Empfangseinrichtung (3) eine Audio-Empfangseinheit zum Empfangen von Audiosignalen (41), eine Audio-Speichereinheit (31) zum Speichern von Audiosignalen (41), eine Video-Empfangseinheit zum Empfangen von Videosignalen und mindestens eine Vergleichseinheit zum Vergleichen von Audiosignalen (41) und Videosignalen (51) zum Detektieren bei Empfang eines Audiosignals (41), ob ein korrespondierendes Videosignal (51) an der Empfangseinrichtung (2) verfügbar ist und bei Empfang eines Videosignals (51), ob ein korrespondierendes Audiosignal (41) an der Empfangseinrichtung (3) verfügbar ist, wobei das Videosignal (51) und das Audiosignal (41) zusammen ausgegeben werden, wenn die korrespondierenden Signale verfügbar sind, wobei die Vergleichseinheit, die Audio-Speichereinheit (31) und eine Ausgabeeinheit zur Ausgabe von Audiosignalen untereinander verbunden sind, wobei die Audio-Speichereinheit (31) einen Schwellenwert für Speicherzeit hat und das empfangene Audiosignal in Abwesenheit eines korrespondierenden Videosignals in der Audio-Speichereinheit gespeichert wird, wobei das Audiosignal gespeichert wird, bis der Schwellenwert für die Speicherzeit erreicht wird, wenn das korrespondierende Videosignal an der Empfangseinrichtung nicht verfügbar ist, und wenn der Schwellenwert für die Speicherzeit überschritten wird, das Audiosignal mit dem Videosignal ausgegeben wird, wenn zu diesem Zeitpunkt das korrespondierende Videosignal verfügbar ist oder andernfalls ohne Videosignal, **dadurch gekennzeichnet, dass** die Empfangseinrichtung weiterhin eine Informationserzeugungseinheit zum Erzeugen einer Information über die Verzögerung des Empfangs korrespondierender Audio- und Videosignale aufweist, wobei die Empfangseinrichtung (3) die Verzögerung beim Empfangen von Videosignalen (51) verglichen zu korrespondierenden Audiosignalen (41) detektiert und eine an die Übertragungseinrichtung (3) zu übertragende Information über die Verzögerung erzeugt, die es gestattet, die Videosignaleigenschaften und/oder Videosignalübertragungsparameter and er Übertragungseinrichtung zu ändern, wobei die Information über die Verzögerung die Information ist, dass die Verzögerung größer ist als der Schwellenwert für die Speicherzeit der Audio-Speichereinheit (31).

5. Empfangseinrichtung nach Anspruch 4, **dadurch gekennzeichnet, dass** diese ausgestaltet ist um in einem Verfahren gemäß einem der Ansprüche 1 bis 3 verwendet zu werden.

## Revendications

1. Procédé de synchronisation de signaux audio et de signaux vidéo correspondants dans un système vidéo pour la transmission de signaux audio (41) et de signaux vidéo (51) d'un dispositif de transmission (2) à un dispositif de réception (3), dans lequel
- les signaux audio (41) et les signaux vidéo (51) sont traités séparément au niveau du dispositif de réception (3),
- le dispositif de réception (3), à la réception d'un signal audio (41), détecte si un signal vidéo correspondant (51) est disponible au niveau du dispositif de réception (3) et, à la réception d'un signal vidéo (51), détecte si un signal audio correspondant (41) est disponible au niveau du dispositif de réception (3), et le signal vidéo (51) et le signal audio (41) sont délivrés en sortie conjointement si les signaux correspondants sont disponibles,
- le dispositif de réception (3), en l'absence d'un signal vidéo correspondant (51), stocke le signal audio (41) reçu dans une unité de stockage, dans lequel le signal audio (41) est stocké jusqu'à ce qu'une valeur de seuil pour un temps de stockage de l'unité de stockage soit atteinte, si le signal vidéo correspondant (51) n'est pas disponible au niveau du dispositif de réception, et, une fois que le seuil pour un temps de stockage est dépassé, le signal audio sera délivré en sortie avec le signal vidéo, si à cet instant le signal vidéo correspondant est disponible ou sinon sans signal vidéo, **caractérisé en ce que**
- le dispositif de réception (3) détecte le retard dans la réception de signaux vidéo par rapport à des signaux audio correspondants (51) et génère des informations sur le retard à transmettre au dispositif de transmission (2), les informations sur le retard étant les informations que le retard est supérieur à la valeur de seuil pour un temps de stockage de l'unité de stockage (31) pour stocker des signaux audio (41) et
- à la réception d'informations sur le retard de signaux vidéo au niveau du dispositif de transmission, des propriétés de signal vidéo et/ou des paramètres de transmission de signal vidéo sont changés au niveau du dispositif de transmission pour régler la transmission du signal vidéo sur la transmission du signal audio.

2. Procédé selon la revendication 1, **caractérisé en ce que** le dispositif de réception (3) rejette des signaux vidéo (51) en l'absence du signal audio correspondant (41) au niveau du dispositif de réception (3) .

3. Procédé selon l'une quelconque des revendications 1 ou 2, **caractérisé en ce que** les signaux audio (41) et les signaux vidéo (51) sont transmis via des canaux de communication différents (4, 5) .

4. Dispositif de réception d'un système vidéo (1) pour la transmission de signaux vidéo (51) et de signaux audio (41) d'un dispositif de transmission (2) à un dispositif de réception (3) via un réseau de communication (A, B), dans lequel le dispositif de réception (3) comprend une unité de réception audio pour recevoir des signaux audio (41), une unité de stockage audio (31) pour stocker des signaux audio (41), une unité de réception vidéo pour recevoir des signaux vidéo (51) et au moins une unité de comparaison pour comparer des signaux audio (41) et des signaux vidéo (51) pour détecter, à la réception d'un signal audio (41), si un signal vidéo correspondant (51) est disponible au niveau du dispositif de réception (2) et, à la réception d'un signal vidéo (51), si un signal audio correspondant (41) est disponible au niveau du dispositif de réception (3), le signal vidéo (51) et le signal audio (41) sont délivrés en sortie conjointement si les signaux correspondants sont disponibles,
dans lequel l'unité de comparaison, l'unité de stockage audio (31) et une unité de sortie pour délivrer en sortie des signaux audio sont interconnectées,
dans lequel l'unité de stockage audio (31) a une valeur de seuil pour un temps de stockage et le signal audio reçu est stocké dans l'unité de stockage audio en l'absence d'un signal vidéo correspondant, dans lequel le signal audio est stocké jusqu'à ce que la valeur de seuil pour un temps de stockage soit atteinte, si le signal vidéo correspondant n'est pas disponible au niveau du dispositif de réception, et, une fois que la valeur de seuil pour un temps de stockage est dépassée, le signal audio sera délivré en sortie avec le signal vidéo, si à cet instant le signal vidéo correspondant est disponible ou sinon sans signal vidéo, **caractérisé en ce que**
le dispositif de réception comprend en outre une unité de génération d'informations pour générer des informations sur un retard de réception de signaux audio et vidéo correspondants, dans lequel le dispositif de réception (3) détecte le retard dans la réception de signaux vidéo (51) par rapport à des signaux audio correspondants (41) et génère des informations sur le retard à transmettre au dispositif de transmission (2), en permettant de changer les propriétés de signal vidéo et/ou des paramètres de transmission de signal vidéo au niveau du dispositif de transmission, dans lequel les informations sur le retard sont les informations que le retard est supérieur à la valeur de seuil pour un temps de stockage de l'unité de stockage audio (31).

5. Dispositif de réception selon la revendication 4, **caractérisé en ce qu'**il est équipé pour être utilisé dans un procédé selon l'une quelconque des revendications 1 à 3.
